# EUROPEAN PATENT APPLICATION

(11) **EP 3 343 454 A1**
(43) Date of publication of application: **04.07.2018**
(21) Application number: 16206919.9
(22) Date of filing: 27.12.2016
(51) Int. Cl.: G06K 19/077

(54) **SYSTEM FOR INFORMATION PLATE**

(71) Applicant: Confidex Oy, 33900 Tampere (FI)
(72) Inventor: Ritamäki, Matti, 33900 Tampere (FI)
(74) Representative: Kolster Oy Ab

(57) **Abstract**

A system for information plate, including an information plate (1) comprising an electrically conductive layer (3) and an information side or surface, a slot formed in and through the electrically conductive layer, a RFID tag (4) positioned on the slot (5), the RFID tag comprising a chip (6), a microstrip feeding element (7) coupled to the chip, and a dielectric inlay (8) arranged between the electrically conductive layer and said chip and said microstrip feeding element. The chip is arranged to be coupled with the electrically conductive layer via said microstrip feeding element, the slotted electrically conductive layer thus serving as an antenna of said RFID tag.

## Description

### Background

The invention relates to a system for information plate, including an information plate comprising an electrically conductive layer and an information side or surface.

RFID (Radio Frequency Identification) tags are commonly used in vehicle license plates together with human readable register number. Since the reading of RFID tag does not require line of sight, the register number can be read even though the plate is covered by dirt etc. RFID readers are also relatively low cost and require less maintenance than machine vision systems. Also reliability of identification is high.

License plates are usually manufactured from metal or plastic. The material, or more precisely the electrical conductivity thereof, plays an important role in selecting a RFID antenna suitable for the plate. A regular dipole antenna will work in plastic plates, but metallic plates require an antenna which will work on metal. A planar inverted F-antenna (PIFA) can be utilized to get good reading distance with a metal plate.

The RF performance (read distance) of PIFA is function of antenna structure thickness. Thicker antenna would provide better performance.

However, a problem with thick PIFA antennas is that its thick structure causes challenges to plate stamping process. Stamping process and tooling would need to be changed if thick, i.e. 1 mm, or more, RFID tags are used.

### Brief description

Viewed from a first aspect, there can be provided a system for information plate, including an information plate comprising an electrically conductive layer and an information side or surface, a slot formed in and through the electrically conductive layer, a RFID tag positioned on the slot, the RFID tag comprising a chip, a microstrip feeding element coupled to the chip, and a dielectric inlay arranged between the electrically conductive layer and said chip and said microstrip feeding element, wherein the chip is arranged to be coupled with the electrically conductive layer via said microstrip feeding element, the slotted electrically conductive layer thus serving as an antenna of said RFID tag.

Thereby an information plate being easily manufactured may be achieved.

The system for information plate is characterised by what is stated in the characterising part of the independent claim. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

### Brief description of figures

Some embodiments illustrating the present disclosure are described in more detail in the attached drawings, in which
Figure 1 is a schematic back view of a system for an information plate in partial cross-section, and
Figure 2 is a schematic side view of the system for an information plate shown in Figure 1.

In the figures, some embodiments are shown simplified for the sake of clarity. Similar parts are marked with the same reference numbers in the figures.

### Detailed description

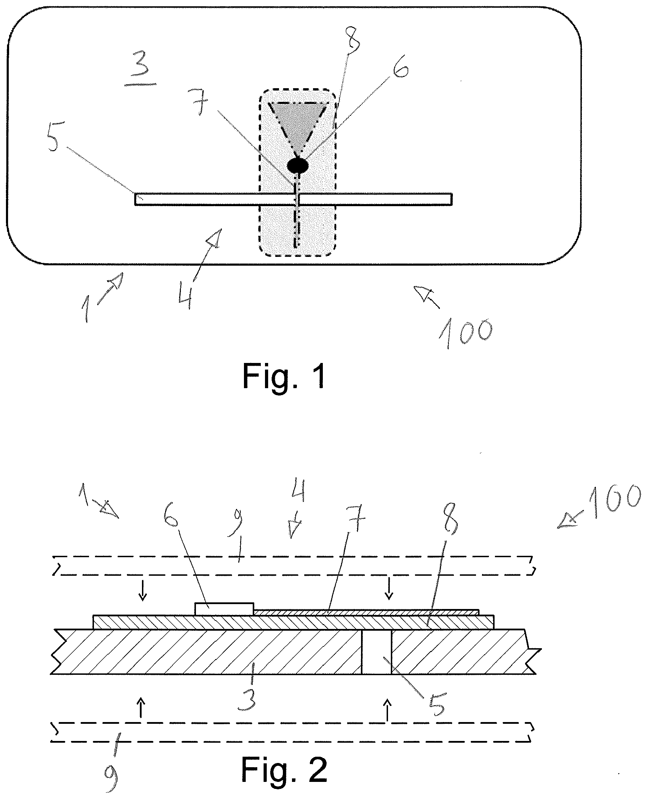

Figure 1 is a schematic back view of a system 100 for an information plate in partial cross-section, and Figure 2 is a schematic side view of the system for an information plate shown in Figure 1.

The system 100 comprises an information plate 1 comprising an electrically conductive layer 3.

In an embodiment, the information plate 1 is a licence plate of a vehicle, such as a car, a truck, a motor cycle, etc.

In another embodiment, the information plate 1 is a traffic sign.

In a still another embodiment, the information plate 1 is a name plate, such as a street name plate etc.

The information plate 1 includes an information side or surface 2. The information side 2 or surface comprises at least one visually readable sign selected from numbers, letters, symbols, characters etc.

In an embodiment, the information surface 2 comprises reflective element(s). The reflective element may be at least one readable sign, a background of the readable sign, or both the at least one readable sign and the background thereof.

The electrically conductive layer 3 may be e.g. a metal sheet, electrically conductive plastic or electrically conductive plastic composition, or a metal coating manufactured on an electrically non-conductive substrate (not shown).

According to an aspect of the invention, the electrically conductive layer 3 forms the whole shape of the information plate 1, i.e. including also the outer periphery of the information plate 1. In an embodiment, said metal plate forms the surface onto which the information surface 2 is established, and also the opposite surface of the information plate 1.

In another embodiment, the information surface 2 is formed on a sheet or plate 9 arranged on the electrically conductive layer 3. The material of said sheet 9 may be e.g. plastics and it may be electrically non-conductive or conductive. If the sheet 9 is electrically or conductive, there is an electrical insulator layer (not shown) arranged between the sheet 9 and the layer 3.According to another aspect of the invention, the electrically conductive layer 3 is smaller in size than the information plate 1 or the information surface 2.

The system 100 comprises an RFID tag 4. According to an aspect of the invention, the RFID tag is arranged on opposite side of the plate in relation to the information surface 2 as shown as an option in Figure 2.

According to another aspect of the invention, the RFID tag 4 is arranged on same side of the electrically conductive plate 3 as the information surface 2.

Also the sheet 9 and the information surface 2 thereon may be arranged on same or opposite side of the electrically conductive layer 3 relative to the RFID tag 4, as shown as optional embodiments in Figure 2. It is to be noted, that the sheet 9 is shown apart from the electrically conductive layer 3 for sake of clarity.

The system 100 further comprises a slot 5 formed in and through the electrically conductive layer 3. According to an aspect, the length of the slot 5 is about half of the wavelength used by the antenna. In an embodiment, the length of the slot 5 is about 15 cm.

The RFID tag 4 is positioned on the slot 5 and attached directly or indirectly to the electrically conductive layer 3.

The RFID tag 4 comprises a chip 6 that includes an integrated circuit. The RFID tag 4 further comprises a microstrip feeding element 7 coupled to the chip 6, and a dielectric inlay 8. The dielectric inlay 8 is arranged between the electrically conductive layer 3 and said chip 6 and said microstrip feeding element 7.

The chip 6 is arranged to be coupled with the electrically conductive layer 3 via the microstrip feeding element 7 and the slot 5 by an electromagnetic coupling so that the slotted electrically conductive layer 3 may thus serve as an antenna of said RFID tag 4.

As shown in Figure 1, the RFID tag 4 may comprise a micro-strip stub 10, the shape of which may be e.g. triangle or sector, or any other structure that may function as a short-circuit element. The length of the micro-strip stub 10 is preferably ¼ of the wavelength used by the RFID tag.

The combination of the antenna, i.e. the electrically conductive layer 3, and the RFID tag is very thin and thus problems with plate stamping process may be avoided or at least essentially reduced.

In the embodiment shown in Figures, the microstrip feeding element 7 is arranged to cross the slot 5 perpendicularly. An advantage is that the performance of the antenna may be optimized.

However, in other embodiments, the microstrip feeding element 7 is arranged to cross the slot in an angle selected from range of 45° to 90°. An advantage is that the performance of the antenna is good or even optimized. In the embodiment shown in Figures, the microstrip feeding element 7 is arranged to cross the slot 5 in the midpoint thereof. An advantage is that the performance of the antenna may be optimized.

In other embodiments, the microstrip feeding element 7 is arranged to cross the slot 5 between the midpoint and one end of the slot 5. An advantage is that the manufacturing process and/or robustness of the system 100 may be optimized.

In an embodiment, the slot 5 is a rectangular slot, optionally with rounded end(s). An advantage is that the length of the electrically conductive layer functioning as an antenna may be maximised. However, the shape of the slot 5 may be selected rather freely. It may be e.g. meandering, oval, round, square, polygon etc. in its shape.

In the embodiment shown in Figures, the electrically conductive layer 3 (and optionally also the information plate 1) has a rectangular shape and the slot 5 is arranged parallel to the nearest edge of the information plate 1. An advantage is that the length of the slot may be maximised.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.The drawings and the related description are only intended to illustrate the idea of the invention. The invention may vary in detail within the scope of the inventive idea defined in the following claims.

### Reference symbols

- 1: information plate
- 2: information surface
- 3: electrically conductive layer
- 4: RFID tag
- 5: slot
- 6: chip
- 7: microstrip feeding element
- 8: inlay
- 9: sheet
- 10: stub

- 100: system

## Claims

1. A system for information plate, including an information plate comprising an electrically conductive layer and an information side or surface,
a slot formed in and through the electrically conductive layer,
a RFID tag positioned on the slot, the RFID tag comprising a chip,
a microstrip feeding element coupled to the chip, and
a dielectric inlay arranged between the electrically conductive layer and said chip and said microstrip feeding element, wherein
the chip is arranged to be coupled with the electrically conductive layer via said microstrip feeding element,
the slotted electrically conductive layer thus serving as an antenna of said RFID tag.

2. The system as claimed in claim 1, wherein the information plate is a licence plate of a vehicle.

3. The system as claimed in claim 1, wherein the information plate is a traffic sign.

4. The system as claimed in claim 1, wherein the information plate is a name plate.

5. The system as claimed in any of the preceding claims, wherein the plate includes information side or surface comprising visually readable signs, optionally reflective element(s), and the RFID tag arranged on opposite side or surface of the plate.

6. The system as claimed in any one of claims 1 to 4, wherein the plate includes information side or surface comprising visually readable signs, reflective element(s), and the RFID tag arranged on same side or surface of the plate.

7. The system as claimed in any one of claims 1 to 4, wherein the system comprises a sheet or plate arranged on the electrically conductive layer, and wherein
the information side or surface comprising visually readable signs, optionally reflective element(s), is formed on said sheet or plate.

8. The system as claimed in claim 7, wherein the sheet or plate is arranged on same side or surface of the plate as the RFID tag.

9. The system as claimed in claim 7, wherein the sheet or plate is arranged on opposite side or surface of the plate relative to the RFID tag.

10. The system as claimed in any of the preceding claims, wherein the microstrip feeding element arranged on the slot and crossing thereof.

11. The system as claimed in claim 10, wherein the microstrip feeding element is arranged to cross the slot perpendicularly.

12. The system as claimed in claim 10 or 11, wherein the microstrip feeding element is arranged to cross the slot in the midpoint thereof.

13. The system as claimed in any of the preceding claims, wherein the slot is a rectangular slot.

14. The system as claimed in any of the preceding claims, wherein the electrically conductive layer has a rectangular shape and
the slot is arranged parallel to the nearest edge of the information plate.

15. The system as claimed in any one of claims 5 to 14, wherein the information side or surface is a surface of the electrically conductive layer.
